# EUROPEAN PATENT SPECIFICATION

(11) **EP 3 466 517 B1**
(45) Date of publication and mention of the grant of the patent: **27.05.2020**
(21) Application number: 17805921.8
(22) Date of filing: 17.05.2017
(51) Int. Cl.: B01D 27/08, B01D 29/13, B01D 35/30, B01D 29/52, F16J 13/10

(54) **SEALED CLOSURE SYSTEM FOR A CARTRIDGE FILTER AND METHOD FOR ASSEMBLING SAME**
ABGEDICHTETES VERSCHLUSSSYSTEM FÜR EINEN PATRONENFILTER UND VERFAHREN ZUR MONTAGE DAVON
SYSTÈME DE FERMETURE ÉTANCHE POUR FILTRE À CARTOUCHES ET SON PROCÉDÉ DE MONTAGE

(30) Priority: 30.05.2016 ES 201630706
(43) Date of publication of application: 10.04.2019
(73) Proprietor: Fluytec, S.A., 48950 Erandio (Vizcaya) (ES)
(72) Inventor: ZELAA IBARLUZEA, Andoni, 48950 Erandio (Vizcaya) (ES)
(74) Representative: Ungria López, Javier
(86) International application number: PCT/ES2017/070318
(87) International publication number: WO 2017/207837

(56) References cited:
- WO-A1-00/56665
- CN-U- 205 252 687
- CN-Y- 201 333 348
- FR-A- 1 474 846
- GB-A- 2 046 614
- JP-U- H0 710 617
- US-A- 2 757 820

## Description

### OBJECT OF THE INVENTION

The present invention relates to a sealed closure system for a cartridge filter.

It is of special application in the field of the industry related to hydraulic filters.

### TECHNICAL PROBLEM TO BE SOLVED AND BACKGROUND OF THE INVENTION

Cartridge filters are filtering equipment that are made up of filter cartridges housed in a body that is connected to a hydraulic conduit and that, therefore, is subjected to the hydraulic pressure with which the conduit works. The pressurised filter has a body, or ferrule, and one or several lids that are mechanically fastened. The join of the filter to the hydraulic conduit is carried out in a manner known in the state of the art and does not form part of the present invention, the constructive form thereof thus not being detailed.

The cartridge filters are used in different applications such as water purification systems, for filtering industrial waters, for the food industry, for the agricultural industry and for desalination plants. In the application aimed at systems for desalination plants, the material used is glass fibre-reinforced polyester (GRP) due to the fact that this material has an optimal behaviour against waters with different levels of salinity, which entails a significant reduction in maintenance of the system.

Cartridge filters are systems that are basically made up of a body, which is connected to a hydraulic conduit, wherein one or several cartridges with material suitable for filtering water is incorporated. The filter also incorporates a lid that closes it in a sealed manner and, therefore, also closes the hydraulic conduit. In this way, when pressure is exerted on the hydraulic conduit, the filter is also pressurised, the water exerting pressure on the lid that is supported by the closure system that incorporates the filter of the invention. However, the lid must be removable, such that the cartridges can be accessed for the revision or replacement thereof.

In the current state of the art, a variety of devices related to the sealed closure systems used in cartridge filters are known. One of the most commonly used systems is based on a flanged lid-body join. This system enables the lid to be disassembled from the body in order to carry out maintenance or change of the cartridges.

The lid-body assembly is tightened by a series of bolts and nuts placed around the join. The number and dimensions of the bolts to be used are calculated according to the ASME code.

An existing alternative to the flanged join consists of the closure systems that include tilting screws. These systems facilitate the assembly since the screws are secured in the body. However, these are considerably more expensive systems since they do not use standard screws. In addition, they cannot be used in GRP bodies, as they are intended for metal pieces.

Another alternative consists of closure systems with clamps. This system has a fairly flexible closure with regards to the number of clamps to be used in each case, although it is more expensive than the above systems. Furthermore, it requires external fastening elements for the clamps, which usually tend to be bars fastened to the outer wall of the body.

As such, the devices mentioned pose a series of problems such as those mentioned below.

In systems that incorporate flanges, the maintenance times are high. The maintenance of equipment with flanges requires an operator to disassemble all the studs of the flanged join. This method can take up to several minutes. Once maintenance is finished (cartridge change, cleaning, seal change, etc.), the operator must again screw each one of the studs of the flanged join according to a screw tightening pattern described in the maintenance manual.

With regards to the systems using tilting screws and systems with clamps, although it is true that they can reduce maintenance time, it is also true that these systems are more expensive, since they do not use standard screws and, normally, they are not used in GRP bodies.

In addition, corrosion-resistant materials are not used for these types of systems.

Lastly, manufacturing these systems in various components, made up of a body and one or two lids joined by means of flanges, means that they have a complex manufacturing and assembly.

Document WO0056665A1 refers to a filter system comprising a high pressure housing where a filter element is located between two mountings located at the ends of the housing. the mountings are fixed to the housing and each of the mountings comprise a passage for fluid that communicates with the filter. The functionality of the mountings is to seal the chamber created by both mountings, the system being used in high pressure terms where, in order to guarantee the closure of the chamber, the end portion is fixed to an annular body that is screwed to a collar comprising a flange that is inserted in an annular groove of the housing, which creates a tight closure.

Document FR1474846A refers to a casing 1 which comprises a shoulder 6 and, closer to the opening, also comprises an annular groove 11 in which a flange 12a of three stop circular segments 12 are accommodated. The segments 12 have a chamfered lower edge 12b forming a frustoconical bearing surface. A shutter 7 is also located in the casing 1, having an O-ring to fit tightly. The shutter 7 also has a chamfered upper edge to lean against the edge 12b of the segments 12. A cover 13 is fixed to the shutter 7 by means of a screw 10 to complete the sealing. When the pressure of a fluid prevails inside the container, the shutter 7 is pushed upwards and exerts on the various stop segments 12 an ascending vertical force that results in a transversal component ensuring the locking of the stop segments 12 at the bottom of the groove 11.

In the state of the art there is an alternative system consisting of a closure system, which does not incorporate screws or bolts, such that the problems entailed by these pieces are intended to be avoided. The system is based on two mortises carried out in the body. An o-ring seal made of an elastomer material, such as EPDM, is placed in the first, innermost, mortise. The lid is assembled in the body resting on a protrusion such that it exerts pressure on the seal, creating a seal in the filter. Closure elements that exert pressure on the lid are located in the outermost mortise, maintaining the system fixed. This system has a series of problems, among which is the difficulty to manufacture and assemble the lid as it must have very precise dimensions in order to create an effective pressure on the o-ring seal and the sealing sought for is carried out.

The present invention resolves the aforementioned problems by having a sealed closure system for cartridge filters of any type of dimension, completely removing all types of mechanical join by means of external elements. In this way, the system has the following advantages:
- Lack of external fastening elements, clamps, screws and external nuts.
- Compact filter with a single body.
- Excellent resistance to corrosion.
- Simple opening and minimal maintenance.
- Valid for diameters of any dimension.
- Reduced space.
- Cost optimisation.

### DESCRIPTION OF THE INVENTION

The invention relates to a sealed closure system according to claim 1. The cartridge filter comprises a body that has a cylindrical configuration to house at least one cartridge, with an annular mortise and a closure system of the body in a sealed manner.

As for the closure system, it comprises a disc-shaped sealing plate that incorporates a perimetral mortise for housing an o-ring seal. The sealing plate is located on three support blocks, located on the perimeter inside the body of the filter, in the positions defined by three orthogonal radii. A closing lid, which is also disc-shaped, is located on the sealing plate. A stop, with revolution geometry, and which is also housed in the annular mortise of the body, is located on the closing lid. The stop has a projection that does not enter the mortise, on which a catch rests, said catch having a revolution geometry that prevents the stop from moving.

In order to achieve the sealed closure of the system, the o-ring seal of the sealing plate has a greater outer diameter than the inner diameter of the body of the filter in the area where the sealing plate is located, creating pressure on the inner wall of the body of the filter and preventing the passage of fluid, which only exerts pressure thereon.

As for the closing lid, it adjustably fits in the body of the filter and conceals part of the annular mortise of the body of the filter. As such, the stop is housed in the outermost free area of the mortise, and the catch is placed on the stop, inserted in the concentric-shaped central hollow, preventing the stop from coming out of the mortise.

In this way, the axial movement of the sealing plate is prevented caused by the pressure of the fluid inside the filter, the sealed closure being configured.

The stop is formed by at least two pieces that joined together create the revolution geometry with which it is configured.

The surface of at least one end, of at least one of the pieces that form the stop, is not coplanar with the rotation axis of the revolution geometry. In this way, at least one end of at least one piece has an angled configuration, such that the assembly and disassembly of the stop is facilitated as this piece is the last one to be assembled and the first to be disassembled.

The filter can also comprise a lifting system to move the closing lid that is joined, by means of a device incorporating a rod, to an L-shaped lever with which the lifting system is actuated. The device comprises an angled tube, with the rod fastened at one of the ends thereof, and a hollow tube, fastened to the body of the filter, which houses the other end of the angled tube. The hollow tube incorporates a groove with a protuberance on each side, between which passes the smaller wing of the "L" shape of the lever. A pin passes through both the protuberances and the lever, on which pin the lever can rotate. The end of the smaller wing of the lever is inserted in the groove such that it is in contact with the end of the angled tube. When the larger arm of the lever is rotated, the angled tube is moved, and with it, the rod which moves the closing lid.

The invention also describes the assembly method of the described sealed closure system according to claim 8.

### BRIEF DESCRIPTION OF THE FIGURES

To complement the invention described herein and for the purpose of aiding to better understand the features of the invention according to a preferred exemplary embodiment thereof, a set of drawings is attached in which the following figures have been depicted with an illustrative and non-limiting character:
Figure 1 represents an exploded perspective view of the sealed closure system of the invention coupled to a cartridge filter, with the body of the filter in cross section to show the elements that make it up.
Figure 2 represents a cross-sectional perspective view of the sealed closure system of the invention coupled to a cartridge filter showing the assembled components that make it up.
Figure 3 represents the lifting system.
Figure 4 shows an embodiment of the stop of the invention with revolution geometry formed by several identical pieces.
Figure 5 shows an embodiment of the stop of the invention formed by several identical pieces and a piece with ends that are not coplanar with the rotation axis of the revolution geometry of the stop.

A list of the reference numbers used in the figures is provided below:
- 1.: Body.
- 2.: Sealing plate.
- 3.: Closing lid.
- 4.: Stop.
- 5.: Catch.
- 6.: Mortise of the body.
- 7.: Support blocks.
- 8.: Lifting system.
- 9.: Hollow tube.
- 10.: Angled tube.
- 11.: Rod.
- 12.: O-ring seal.
- 13.: Protuberances.
- 14.: Lever.
- 15.: Pin.

### DESCRIPTION OF A PREFERRED EMBODIMENT OF THE INVENTION

The present invention relates to a sealed closure system for a cartridge filter.

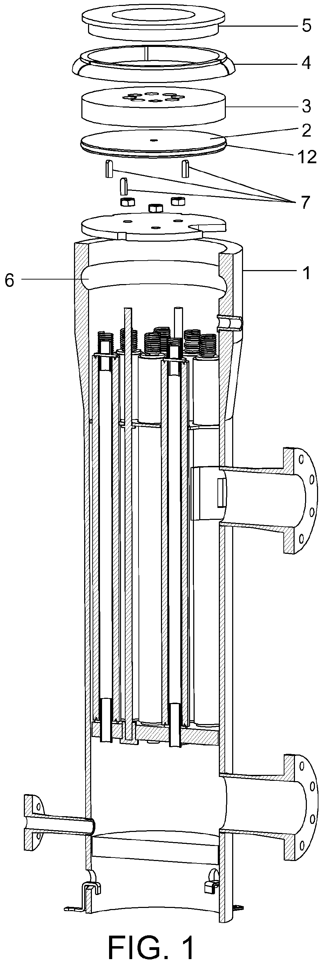

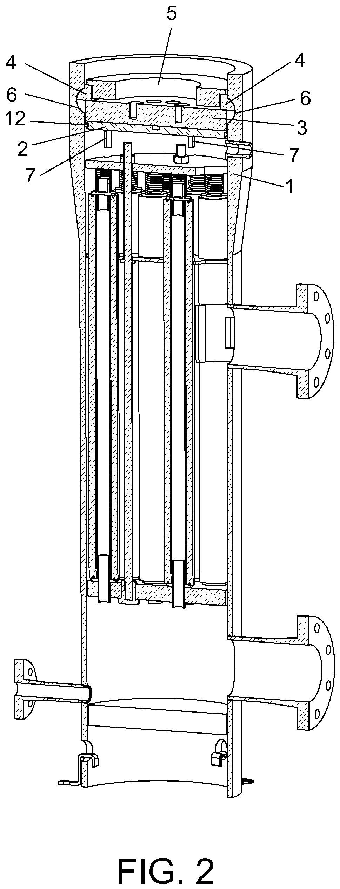

In a preferred embodiment, as shown in figures 1 and 2, the cartridge filter comprises a series of cartridges located between two lids. A first lid is located in the vicinity of the end of the filter that is connected to the hydraulic conduit and acts as a base, on which the cartridges rest. The second lid is a fastening lid of the cartridges and is located in the vicinity of the free end of the filter. Both lids are joined by means of plastic bars, with a length greater than the length of the cartridges, threaded by one of the ends thereof into the first lid and, after passing through holes in the fastening lid, threaded by using bolts at the other end thereof. In this way, and by means of threading the bolts, the fastening lid presses the cartridges against the base lid, fastening the cartridges and maintaining the same in the work position thereof.

As can be seen in figures 1 and 2, the cartridge filter comprises a body (1) that has a cylindrical geometry and an annular mortise (6), made in the vicinity of the free end thereof which, although it can have any configuration, it preferably has a rounded geometry.

Two support blocks (7) diametrically opposed to each other, and a third support block (7) located in a position perpendicular to the diameter that joins the other two support blocks (7) acting as a support for a sealing plate (2), are located inside the body (1) of the filter and in the vicinity of the mortise (6). In this way, the support blocks (7) are located on the perimeter inside the body (1) of the filter in the positions defined by three orthogonal radii. The sealing plate (2) is a disc that incorporates a perimetral mortise for housing in the perimeter an o-ring seal (12). The diameter of the sealing plate (2) is slightly smaller than the inner diameter of the body (1) of the filter in the assembly position. In this way, when an o-ring seal (12) is incorporated into the sealing plate (2), the outer diameter of the o-ring seal (12) is greater than the inner diameter of the body (1) of the filter, and the assembly is by means of pressure. The pressure of the seal (12) on the inner wall of the body (1) is sufficient for the sealing plate (2) to be kept stable on the three support blocks (7) and carry out the sealing function that is required when it is positioned perpendicularly to the axis of the body (1) in which it is housed. However, having only three support blocks (7) is fundamental in the system given that, in order to disassemble the sealing plate (2), it is sufficient to strike the sealing plate (2) such that it tilts on the two blocks (7) located diametrically opposed to each other in an area opposite the third support block (7). This free area of the support blocks (7) where the sealing plate (2) is struck in order to disassemble it can be marked on the plate (2) itself. In this way, care must be taken to position it correctly during assembly. Another form of control can be to carry out a mark on the area of the body of the filter where there are no support blocks (7).

A closing lid (3) is located on the sealing plate (2) which acts as a rest for the location of a stop (4). The closing lid (3) ensures the perpendicular positioning of the sealing plate (2) with respect to the axis of the body (1).

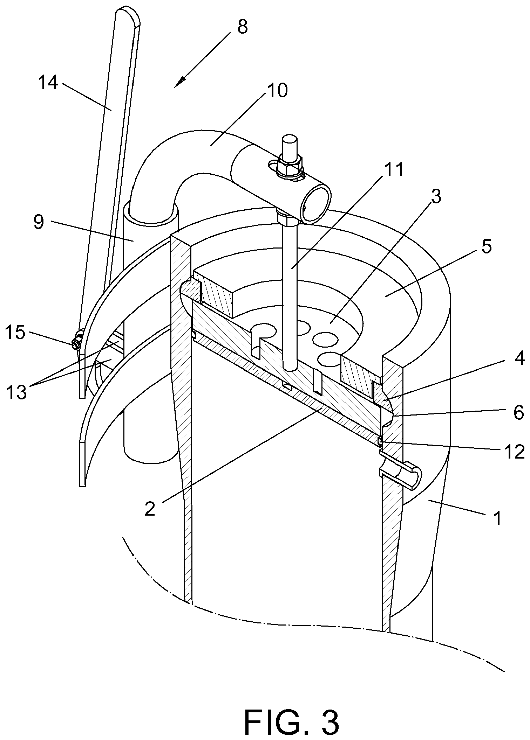

The stop (4) has a revolution geometry which cross-section, in this preferred embodiment, has a quarter circle configuration with one of the sides being extended to form a projection, as can be seen in figures 2 and 3. In any case, the cross-section of the stop (4) can in general have any geometry with a generic "L" shape, that is, which incorporates an area that is introduced in the mortise (6) and another area that extends from the mortise (6).

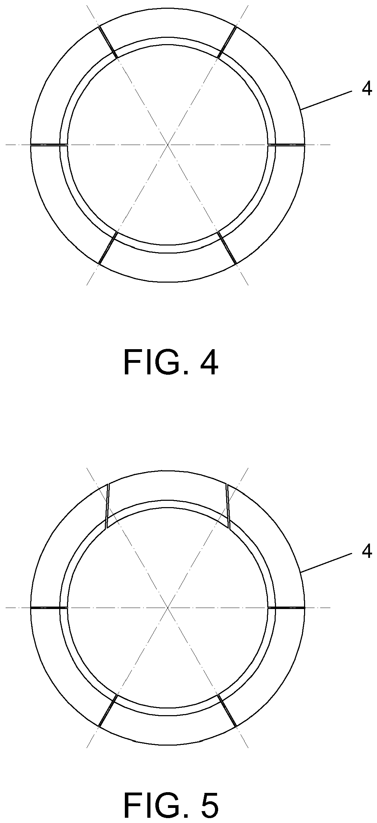

Despite the fact that the stop (4) can be formed by a single piece, it is preferably sectioned forming several pieces, such that the assembly and disassembly thereof is facilitated. As such, in an embodiment of the stop (4), as shown in figure 4, the pieces into which the stop (4) is divided are created with orthogonal cross sections, that is, coplanar with the rotation axis of the revolution geometry.

In another embodiment of the stop (4), as shown in figure 5, the ends of one of the pieces that form the stop (4) are created by sections that are not coplanar with the rotation axis of the revolution geometry, having an angled geometry. This new geometry of pieces is carried out in order to further facilitate the assembly and disassembly of the stop (4), such that the piece with the angled geometry is the last to be assembled and the first to be disassembled, acting as a closing piece of the assembly. In addition, despite the fact that the piece can only have one of the ends with this configuration, or that there can be several pieces with this configuration, it is preferable for only one of the pieces to have this configuration, such that it is easily recognisable when the assembly is assembled.

The closing lid (3) conceals a portion of the mortise (6), leaving the remaining portion of the mortise (6) free so that the stop (4) is housed by the circular geometry thereof, the projection remaining outside, as shown in figures 2 and 3.

As shown in figure 2, in order to prevent the pieces forming the stop (4) from coming out of the mortise (6), the system also comprises a catch (5). The catch (5) is concentrically inserted in the hollow of the stop (4). The geometry of the catch (5) is also a revolution geometry, similarly to the stop (4) with an L-shaped cross section. The smaller wing of the "L" is intended to rest on the projection of the stop (4). The larger wing of the "L" is intended to prevent the movement of the stop (4) towards the inside of the body (1).

The projection of the stop (4) has two functions, such as acting as a rest for the catch (5) and as a gripping area so as to be removed from the mortise (6).

In another embodiment, the filter incorporates a lifting system (8) to facilitate the removal of the closing lid (3) and to be able to access the inside of the filter, as shown in figure 3.

As shown in figure 3, the lifting system (8) is made up of a device formed by a hollow tube (9) fastened to the body (1) of the filter, the axes thereof being aligned. One of the ends of an angled tube (10) is housed inside the tube (9) to reach, with the other end, the centre of the body (1). This other end incorporates a rod (11) fastened to the closing lid (3).

The hollow tube (9) incorporates a groove and a pair of protuberances (13) on each side passed through by a pin (15). An L-shaped lever (14) is located between protuberances (13) and are passed through by the pin (15). The end of the small wing of the L-shaped lever (14) is located inside the groove of the hollow tube (9) and is in contact with one of the ends of the angled tube (10). In this way, when the larger wing of the L-shaped lever (14) is rotated with respect to the pin (15), the smaller wing also rotates and causes the movement of the angled tube (10).

As such, when the lever (14) is actuated, the angled tube (10) is raised with the rod (11) fastened thereto, causing the removal of the closing lid (3).

When the closing lid (3) is removed, there is free access to remove the sealing plate (2) by striking it so that it tilts on the support blocks (7) located diametrically opposite one another in an area opposite the third support block (7).

It must be taken into account that, before actuating the lever (14) of the lifting system, the catch (5) must have been taken off and the stop (4) of the system must be removed given that otherwise the movement is prevented.

By means of the closure system of the present invention, a sealed closure of the cartridge filter is created where it is installed, significantly reducing the opening and closing times during maintenance operations when compared to current systems.

The present invention also relates to the assembly method of the closure system of the cartridge filter. In this way, the method comprises the following steps:
a) Introducing the sealing plate (2) with the o-ring seal (12) into the body (1) of the filter, in an inclined manner, until it rests on the two support blocks (7) located diametrically opposed to each other and tilting over said blocks until it rests on the third support block (7);
b) Placing the closing lid (3) on the sealing plate (2);
c) Introducing the pieces that form the stop (4) into the mortise (6) of the body (1);
d) Placing the catch (5) on the stop (4), concentrically in the central hollow of the stop (4).

In the event that the filter incorporates the lifting system (8), the process starts by considering that the closing lid (3) is fastened to the rod (11).

In any case, the present invention should not be taken to be limited to the embodiment herein described. Other arrangements may be carried out by those skilled in the art based on the present description. Accordingly, the scope of the invention is defined by the following claims.

## Claims

1. A sealed closure system for a cartridge filter that comprises a body (1) that has a cylindrical configuration to house at least one cartridge and with an annular mortise (6) that comprises:
- a sealing plate (2), configured in the shape of a disc that incorporates a perimetral mortise for housing an o-ring seal (12),
- a closing lid (3), configured in the shape of a disc, which is located over the sealing plate (2),
- a stop (4) that is located over the closing lid (3),
- a catch (5) that rests on the projection of the stop (4),
wherein,
- the outer diameter of the o-ring seal (12) of the sealing plate (2), assembled on the sealing plate (2), is greater than the inner diameter of the body (1) in the area in which it is located, causing pressure on the inner wall of the body (1) that creates a seal,
- the closing lid (3) adjustably fits in the body (1) of the filter and conceals part of the mortise (6) such that the stop (4) is housed in the free area of the mortise (6),
the system being **characterised in that**:
- the stop (4) has a revolution geometry with a central hollow and is housed in the annular mortise (6) of the housing leaving a projection extending from the annular mortise (6),
- the catch (5) has a revolution configuration, rests on the stop (4) and is inserted in the central hollow of the stop (4), in order to prevent the stop (4) from coming out of the annular mortise (6),
such that the axial movement of the sealing plate (2) is prevented caused by the pressure of the fluid inside the cartridge filter.

2. Sealed closure system for a cartridge filter according to claim 1, **characterised in that** the catch (5) has a revolution configuration with an L-shaped cross section.

3. Sealed closure system for a cartridge filter according to claim 1 or 2, **characterised in that** the sealing plate (2) is placed on three support blocks (7) located on the perimeter inside the body of the filter, in positions defined by three orthogonal radii.

4. Sealed closure system for a cartridge filter according to claim 3, **characterised in that** the stop (4) has a revolution geometry and is formed by at least two pieces.

5. Sealed closure system for a cartridge filter according to claim 4, **characterised in that** the surface of at least one end, of at least one of the pieces forming the stop (4) is not coplanar with the rotation shaft of the revolution geometry.

6. Sealed closure system for a cartridge filter according to claim 5, **characterised in that** it comprises a lifting system that incorporates an L-shaped lever (14) to actuate a device joined to a rod (11) fastened to the closing lid (3).

7. Sealed closure system for a cartridge filter according to claim 6, **characterised in that** the device comprises an angled tube (10) with the rod (11) fastened at one of the ends and the other end housed in a hollow tube (9), fastened to the body (1) of the filter, which incorporates a groove with a protuberance (13) on each side, between which the lever (14) passes, a pin (15) passing through the protuberances (13) and the lever (14), on which the lever (14) rotates, and the smaller wing of the lever (14) being inserted in the groove and in contact with one of the ends of the angled tube (10) such that when the larger arm of the lever (14) is rotated with respect to the pin, the angled tube (10) moves and, with it, the closing lid (3).

8. An assembly method for a sealed closure system for a cartridge filter according to the preceding claim 7 **characterised in that** it comprises the following steps:
a) Introducing the sealing plate (2) with the o-ring seal (12) into the body (1) of the filter, in an inclined manner, until it rests on the two diametral support blocks (7), tilting the sealing plate (2) over said blocks (7) until it rests on the third support block (7);
b) Placing the closing lid (3) on the sealing plate (2);
c) Placing the pieces that make up the stop (4) on the closing lid (3) inserted in the mortise (6);
d) Placing the catch (5) on the stop (4), concentrically in the central hollow of the stop (4).

9. Assembly method of a closure system for a cartridge filter according to claim 8, **characterised in that** the method starts with the closing lid (3) fastened to the rod (11) of the lifting system.

## Patentansprüche

1. Abgedichtetes Verschlusssystem für ein Patronenfilter, das einen Körper (1), der einen zylindrischen Aufbau hat und wenigstens eine Patrone aufnimmt, und mit einer ringförmigen Nut (6) umfasst, wobei es umfasst:
- eine Dichtplatte (2), die in Form einer Scheibe ausgeführt ist und eine Umfangsnut zum Aufnehmen einer O-Ring-Dichtung (12) enthält,
- einen Verschlussdeckel (3), der in Form einer Scheibe ausgeführt und über der Dichtplatte (2) angeordnet ist,
- eine Auflage (4), die sich über dem Verschlussdeckel (3) befindet,
- eine Sperre (5), die auf dem Vorsprung der Auflage (4) aufliegt, wobei,
- der Außendurchmesser der O-Ring-Dichtung (12) der Dichtplatte (2), die an der Dichtplatte (2) montiert ist, größer ist als der Innendurchmesser des Körpers (1) in dem Bereich, in dem sie sich befindet, wodurch Druck an der Innenwand des Körpers (1) verursacht wird, der eine Dichtung erzeugt,
- der Verschlussdeckel (3) verstellbar in den Körper (1) des Filters passt und einen Teil der Nut (6) abdeckt, so dass die Auflage (4) in dem freien Bereich der Nut (6) aufgenommen ist,
wobei das System **dadurch gekennzeichnet ist, dass:**
- die Auflage (4) eine Rotationsform mit einer mittigen Aussparung hat und in der ringförmigen Nut (6) des Gehäuses aufgenommen ist, so dass ein Vorsprung bleibt, der aus der ringförmigen Nut (6) vorsteht,
- die Sperre (5) eine Rotationsform hat, auf der Auflage (4) aufliegt und in die mittige Aussparung der Auflage (4) eingeführt ist, um zu verhindern, dass sich die Auflage (4) aus der ringförmigen Nut (6) löst,
so dass die axiale Bewegung der Dichtplatte (2) aufgrund des Drucks der Flüssigkeit im Inneren des Patronenfilters verhindert wird.

2. Abgedichtetes Verschlusssystem für ein Patronenfilter nach Anspruch 1, **dadurch gekennzeichnet, dass** die Sperre (5) eine Rotationsform mit einem L-förmigen Querschnitt hat.

3. Abgedichtetes Verschlusssystem für ein Patronenfilter nach Anspruch 1 oder 2, **dadurch gekennzeichnet, dass** die Dichtplatte (2) auf drei Trageblöcke (7) aufgelegt ist,
die sich an dem Umfang im Inneren des Körpers des Filters an Positionen befinden, die durch drei orthogonale Radien definiert sind.

4. Abgedichtetes Verschlusssystem für ein Patronenfilter nach Anspruch 3, **dadurch gekennzeichnet, dass** die Auflage (4) eine Rotationsform hat und durch wenigstens zwei Teile gebildet wird.

5. Abgedichtetes Verschlusssystem für ein Patronenfilter nach Anspruch 4, **dadurch gekennzeichnet, dass** die Oberfläche wenigstens eines Endes wenigstens eines der Teile, die die Auflage (4) bilden, nicht koplanar mit der Drehachse der Rotationsform ist.

6. Abgedichtetes Verschlusssystem für ein Patronenfilter nach Anspruch 5, **dadurch gekennzeichnet, dass** es ein Hebe-System umfasst, das einen L-förmigen Hebel (14) zum Betätigen einer Vorrichtung umfasst, die mit einer an dem Verschlussdeckel (3) befestigten Stange (11) verbunden ist.

7. Abgedichtetes Verschlusssystem für ein Patronenfilter nach Anspruch 6, **dadurch gekennzeichnet, dass** die Vorrichtung ein abgewinkeltes Rohr (10) umfasst und die Stange (11) an einem der Enden befestigt ist und das andere Ende in einem hohlen Rohr (9) aufgenommen ist, das an dem Körper (1) des Filters befestigt ist und eine Nut mit einem Vorsprung (13) an jeder Seite enthält, zwischen denen der Hebel (14) hindurchtritt, ein Stift (15) sich durch die Vorsprünge (13) und den Hebel (14) hindurch erstreckt, an dem sich der Hebel (14) dreht, und der kleinere Schenkel des Hebels (14) in die Nut eingeführt und in Kontakt mit einem der Enden des abgewinkelten Rohrs (10) ist, so dass, wenn der größere Schenkel des Hebels (14) in Bezug auf den Stift gedreht wird, sich das abgewinkelte Rohr (10) und mit ihm der Verschlussdeckel (3) bewegt.

8. Montageverfahren für ein abgedichtetes Verschlusssystem für ein Patronenfilter nach dem vorangehenden Anspruch 7, **dadurch gekennzeichnet, dass** es die folgenden Schritte umfasst:
a) Einführen der Dichtplatte (2) mit der O-Ring-Dichtung (12) in den Körper (1) des Filters in geneigter Stellung, bis sie auf den zwei diametralen Trageblöcken (7) aufliegt, wobei die Dichtplatte (2) über den Blöcken (7) gekippt wird, bis sie auf dem dritten Trageblock (7) aufliegt;
b) Auflegen des Verschlussdeckels (3) auf die Dichtplatte (2);
c) Auflegen der Teile, die die Auflage (4) bilden, auf den in die Nut (6) eingeführten Verschlussdeckel (3);
d) Auflegen der Sperre (5) auf die Auflage (4) konzentrisch in der mittigen Aussparung der Auflage (4).

9. Verfahren zur Montage eines Verschlusssystems für ein Patronenfilter nach Anspruch 8, **dadurch gekennzeichnet, dass** das Verfahren mit dem an der Stange (11) des Hebe-Systems befestigten Verschlussdeckel (3) beginnt.

## Revendications

1. Système de fermeture étanche pour un filtre à cartouches qui comprend un corps (1) qui a une configuration cylindrique pour recevoir au moins une cartouche et avec une gorge annulaire (6) qui comprend :
- une plaque d'étanchéité (2), configurée sous forme d'un disque qui incorpore une gorge périmétrique pour recevoir un joint torique (12),
- un couvercle de fermeture (3), configuré sous forme d'un disque, qui est situé au-dessus de la plaque d'étanchéité (2),
- un arrêt (4) qui est situé au-dessus du couvercle de fermeture (3),
- un butoir (5) qui repose sur la saillie de l'arrêt (4),
où
- le diamètre externe du joint torique (12) de la plaque d'étanchéité (2), assemblé sur la plaque d'étanchéité (2), est plus grand que le diamètre interne du corps (1) dans la zone dans laquelle il est situé, en causant une pression sur la paroi interne du corps (1) qui crée un joint,
- le couvercle de fermeture (3) s'adapte de manière ajustable dans le corps (1) du filtre et masque une partie de la gorge (6) de sorte que l'arrêt (4) est reçu dans la zone libre de la gorge (6),
le système étant **caractérisé en ce que** :
- l'arrêt (4) a une géométrie de révolution avec un creux central et est reçu dans la gorge annulaire (6) du boîtier en laissant une saillie s'étendant depuis la gorge annulaire (6),
- le butoir (5) a une configuration de révolution, repose sur l'arrêt (4) et est inséré dans le creux central de l'arrêt (4), pour empêcher l'arrêt (4) de sortir de la gorge annulaire (6),
de sorte que le mouvement axial de la plaque d'étanchéité (2) est empêché causé par la pression du fluide à l'intérieur du filtre à cartouches.

2. Système de fermeture étanche pour un filtre à cartouches selon la revendication 1, **caractérisé en ce que** le butoir (5) a une configuration de révolution avec une section transversale en forme de L.

3. Système de fermeture étanche pour un filtre à cartouches selon la revendication 1 ou 2, **caractérisé en ce que** la plaque d'étanchéité (2) est placée sur trois blocs de support (7) situés sur le périmètre à l'intérieur du corps du filtre, dans des positions définies par trois rayons orthogonaux.

4. Système de fermeture étanche pour un filtre à cartouches selon la revendication 3, **caractérisé en ce que** l'arrêt (4) a une géométrie de révolution et est formé par au moins deux pièces.

5. Système de fermeture étanche pour un filtre à cartouches selon la revendication 4, **caractérisé en ce que** la surface d'au moins une extrémité, d'au moins l'une des pièces formant l'arrêt (4) n'est pas coplanaire avec l'axe de rotation de la géométrie de révolution.

6. Système de fermeture étanche pour un filtre à cartouches selon la revendication 5, **caractérisé en ce qu'**il comprend un système de levage qui incorpore un levier en forme de L (14) pour actionner un dispositif joint à une tige (11) fixée au couvercle de fermeture (3).

7. Système de fermeture étanche pour un filtre à cartouches selon la revendication 6, **caractérisé en ce que** le dispositif comprend un tube coudé (10) avec la tige (11) fixée à l'une des extrémités et l'autre extrémité reçue dans un tube creux (9), fixé au corps (1) du filtre, qui incorpore une rainure avec une protubérance (13) de chaque côté, entre lesquelles le levier (14) passe, une broche (15) passant à travers les protubérances (14) et le levier (14), sur laquelle le levier (14) tourne, et la plus petite aile du levier (14) étant insérée dans la rainure et en contact avec l'une des extrémités du tube coudé (10) de sorte que quand le plus grand bras du levier (14) est amené à tourner par rapport à la broche, le tube coudé (10) se déplace et, avec lui, le couvercle de fermeture (3).

8. Procédé d'assemblage pour un système de fermeture étanche pour un filtre à cartouches selon la revendication 7 précédente **caractérisé en ce qu'**il comprend les étapes suivantes :
a) introduction de la plaque d'étanchéité (2) avec le joint torique (12) dans le corps (1) du filtre, d'une manière inclinée, jusqu'à ce qu'elle repose sur les deux blocs de support (7) diamétraux, basculement de la plaque d'étanchéité (2) au-dessus desdits blocs (7) jusqu'à ce qu'elle repose sur le troisième bloc de support (7) ;
b) mise en place du couvercle de fermeture (3) sur la plaque d'étanchéité (2) ;
c) mise en place des pièces qui constituent l'arrêt (4) sur le couvercle de fermeture (3) inséré dans la gorge (6) ;
d) mise en place du butoir (5) sur l'arrêt (4), de manière concentrique dans l'évidement central de l'arrêt (4).

9. Procédé d'assemblage d'un système de fermeture pour un filtre à cartouches selon la revendication 8, **caractérisé en ce que** le procédé débute avec le couvercle de fermeture (3) fixé à la tige (11) du système de levage.
